# EUROPÄISCHE PATENTSCHRIFT

(11) **EP 3 441 330 B1**
(45) Veröffentlichungstag und Bekanntmachung des Hinweises auf die Patenterteilung: **20.05.2020**
(21) Anmeldenummer: 18181384.1
(22) Anmeldetag: 03.07.2018
(51) Int. Cl.: B65G 51/06

(54) **ROHRPOSTBÜCHSE UND MAGAZIN ZUR AUFNAHME VON PROBENRÖHRCHEN**
PNEUMATIC TUBE CARRIER AND CARTRIDGE FOR HOLDING PNEUMATIC TUBES
TUBE DE SYSTÈME DE MANUTENTION PNEUMATIQUE ET MAGASIN DE RÉCEPTION DES TUBES À ÉCHANTILLON

(30) Priorität: 27.07.2017 DE 102017212986
(43) Veröffentlichungstag der Anmeldung: 13.02.2019
(73) Patentinhaber: Aerocom GmbH & Co. Communicationssysteme, 73529 Schwäbisch Gmünd (DE)
(72) Erfinder: Pfitzer, Rüdiger, 73525 Schwäbisch Gmünd (DE); Meiling, Johannes, 73525 Schwäbisch Gmünd (DE); Breitmeier, Uwe, 73560 Böbingen (DE)
(74) Vertreter: Kohler Schmid Möbus Patentanwälte

(56) Entgegenhaltungen:
- EP-B1- 2 657 160
- WO-A1-2014/081283
- GB-A- 1 323 530

## Beschreibung

Die Erfindung betrifft eine Rohrpostbüchse mit einem Magazin zur Aufnahme von Probenröhrchen.

In der medizinischen Praxis werden derlei Probenröhrchen als Probenbehältnis zur Entnahme, Aufbereitung, den Transport und die zumindest kurzfristige Lagerung von Körperflüssigkeiten wie beispielsweise Blut, Liquor cerebrospinalis, Pleuraflüssigkeit und dergleichen, eingesetzt. Die Entnahmeröhrchen sind in der Regel aus Kunststoff gefertigt und können insbesondere als sogenannte Entnahmeröhrchen mit einem zumeist spritzenartigen Aufbau ausgeführt sein. Die Probenröhrchen werden in der Praxis häufig mittels einer Rohrpostanlage zu einem vorgegebenen gebäudeinternen oder gebäudeexternen Bestimmungsort, etwa einem diagnostischen Labor, transportiert. Dazu werden sogenannte Rohrpostbüchsen, die auch als Versand-Kartuschen bezeichnet werden, eingesetzt. Die Rohrpostbüchsen weisen in der Regel einen rohrförmigen Grundkörper auf, der beidenends mit einer Öffnung versehen ist, über die die Rohrpostbüchse mit den Probenröhrchen bestückt und wieder entleert werden kann. Die Öffnungen sind in der Regel mit einem Schwenk- oder Klapp-Deckel verschließbar.

Die Rohrpostbüchsen sowie die darin angeordneten Probenröhrchen werden im normalen Fahrbetrieb der Rohrpostanlage häufig enormen Kräften von bis zum 10-fachen der Erdbeschleunigung (10g) und mitunter heftigen Erschütterungen ausgesetzt. Beim Transport von Blutproben kann dies zur Hämolyse, d. h. einer Zerstörung von roten Blutkörperchen, und damit einhergehend zu einer Verfälschung von Messergebnissen jeweilig zu bestimmender diagnostischer Parameter führen.

In der Praxis werden die Rohrpostbüchsen für den Transport von Entnahmeröhrchen deshalb mitunter mit einem Schaumstoffmaterial ausgekleidet, um eine gewisse Dämpfung der Erschütterungen zu erreichen. Dadurch wird jedoch ein Entleeren der Rohrpostbüchse erschwert. Auch ergeben sich dadurch ggf. hygienische Probleme, zumal das eingesetzte Schaummaterial für eine hygienische Aufbereitung nicht oder nur wenig geeignet ist.

Aus der WO 2014/081 283 A1 ist eine Rohrpostbüchse für den Transport von Probenröhrchen mit einem rohrförmigen Grundkörper bekannt geworden, der beidenends eine jeweils mit einem Deckel verschließbare Öffnung aufweist. Im Grundkörper ist ein Magazin angeordnet, das mehrere Aufnahmen umfasst, die innerhalb des Grundkörpers nebeneinanderliegend angeordnet sind und in die jeweils zumindest ein zu transportierendes Probenröhrchen in Richtung der Magazinlängsachse einschiebbar ist.

Jeder Aufnahme ist zumindest ein Haltemittel zugeordnet, um ein in der jeweiligen Aufnahme aufgenommenes Probenröhrchen gegenüber einem ungewollten axial gerichteten Herausrutschen aus der Aufnahme zu sichern.

Eine vergleichbare weitere Rohrpostbüchse nach dem Oberbegriff des Anspruchs 1 mit einem solchen Magazin ist aus EP 2 657 160 B1 bekannt.

Die bekannten Rohrpostbüchsen weisen eine wenig komfortable Handhabung auf. Darüber hinaus kann das vollständige Entleeren der Rohrpostbüchse nicht zuverlässig gewährleistet werden.

Es ist die Aufgabe der Erfindung, eine Rohrpostbüchse mit einem Magazin für den Transport von Probenröhrchen bereitzustellen, die einerseits bequem handzughaben ist und bei der unkontrollierte Bewegungen der Entnahmeröhrchen innerhalb der Rohrpostbüchse während des Versands vermieden werden.

Die die Rohrpostbüchse betreffende Aufgabe wird durch eine Rohrpostbüchse mit den in Anspruch 1 angegebenen Merkmalen gelöst. Weiterbildungen der Erfindung sind Gegenstand der Unteransprüche.

Die Rohrpostbüchse weist erfindungsgemäß ein im Grundkörper angeordnetes Magazin mit mehreren Aufnahmen auf, die nebeneinanderliegend angeordnet sind und in die jeweils zumindest einer der zu transportierenden Entnahmeröhrchen in Richtung der Magazinlängsachse einschiebbar ist. Dadurch können die Entnahmeröhrchen vereinzelt, d.h. ohne einen direkten gegenseitigen Kontakt, transportiert werden. Jede Aufnahme weist erfindungsgemäß zumindest ein Haltemittel auf, um ein in der jeweiligen Aufnahme aufgenommenes Probenröhrchen gegenüber einem ungewollten axial gerichteten Herausrutschen aus der Aufnahme zu sichern. Dadurch kann selbst bei größeren axial gerichteten Kräften, wie diese beispielsweise beim Abbremsen der Rohrpostbüchse auftreten können, ein unkontrolliertes Anstoßen des Gegenstands an einem Bauteil der Rohrpostbüchse vermieden werden. Ein unkontrolliertes Hin- und Her-Schleudern der Entnahmeröhrchen mitsamt der darin befindlichen Probe während des Rohrpostbüchsenversands kann dadurch vermieden werden. Die Aufnahmen sind in ihrer Bemaßung bevorzugt derart auf die Entnahmeröhrchen bzw. Typen von Entnahmeröhrchen abgestimmt, dass diese mit einem nur geringen axialen Spiel in der jeweiligen Aufnahme positionierbar sind. Für das Entleeren der Rohrpostbüchse ist diese erfindungsgemäß mit einem Betätigungsglied versehen, das - bevorzugt bidirektional - um oder entlang einer Bewegungsachse relativ zu den Haltemitteln aus seiner ersten Funktionsstellung in seine jeweilige zweite Funktionsstellung verstellbar angeordnet ist. In einer der Funktionsstellungen des Betätigungsglieds ist eine Überführung aller Haltemittel in ihre jeweilige Freigabeposition bewirkt oder ermöglicht, sodass ein in der jeweiligen Aufnahme angeordnetes Probenröhrchen - vorzugsweise alleinig der Schwerkraft folgend - aus der jeweiligen Aufnahme herausgleiten bzw. herausgeführt werden kann. Durch das Betätigungsglied wird eine konstruktiv einfache und zuverlässige Entriegelung der Haltemittel, d.h. eine Freigabe der im Magazin angeordneten Probenröhrchen, bewirkt. Durch das Ausnutzen der rein schwerkraftvermittelten Entleerung der Rohrpostbüchse kann die Anzahl beweglicher Teile reduziert und mithin der konstruktive Aufbau von Entladestationen (=Rohrpoststationen) der Rohrpostanlage, einfach gehalten werden. Die Rohrpostbüchse kann insoweit ohne einen konstruktiven Mehraufwand auf Seiten von Entladestationen, die auf einer schwerkraftvermittelten Entleerung basieren, auch solchen, die bereits existieren, eingesetzt werden.

Die Aufnahmen sind nach der Erfindung vorzugsweise ringförmig um das Betätigungsglied herum angeordnet. Dadurch kann der zur Verfügung stehende Innenquerschnitt des Grundkörpers der Rohrpostbüchse für den gemeinschaftlichen Transport der Probenröhrchen verbessert genutzt werden.

Die Aufnahmen weisen vorzugsweise eine kreisrunde Querschnittsform auf. Andere Querschnittsformen, insbesondere elliptische oder auch polygonale Querschnittsformen, sind vorstellbar.

Nach einer bevorzugten Weiterbildung der Erfindung sind die Haltemittel jeweils in Form einer Klemmlasche ausgebildet, die durch ein Vorspannelement in einer zur Magazinlängsachse radialen Richtung, bevorzugt nach innen, vorspannbar sind. Durch das Einschieben eines Entnahmeröhrchens in eine der Aufnahmen kann die Klemmlasche gegen die Kraft des Federelements radial nach außen bzw. im Falle des die Klemmlasche nach außen vorspannenden Vorspannelements nach innen ausgelenkt werden. Das in der Aufnahme positionierte Probenröhrchen wird durch die jeweilige Klemmlasche für den Transport relativ zum Magazin innerhalb der Aufnahme in axialer Richtung lagefixiert gehalten.

Erfindungsgemäß kann das Vorspannelement zumindest einen Teil oder alle Aufnahmen des Magazins ringförmig umgreifen. Dadurch wird die Anzahl erforderlicher Vorspannelemente klein gehalten. Sofern ein verschleißbedingter Austausch des Vorspannelements erforderlich wird, kann dieser mit einem nur geringen Zeit- und Kostenaufwand durchgeführt werden.

Das Vorspannelement kann nach der Erfindung aus Gummi oder aus einem anderen Elastomer bestehen. Derlei Gummi- oder Elastomerringe sind am Markt kostengünstig in unterschiedlichen Größen vorkonfektioniert erhältlich, so dass diese bei Bedarf kostengünstig ersetzt werden können. Dies ist für die Unterhaltskosten der Rohrpostbüchse von Vorteil.

Die Halteelemente können in ihrer Haltestellung zumindest teilweise zwischen zwei in einer Aufnahme angeordneten Probenröhrchen angeordnet sein und so eine Vereinzelung der Probenröhrchen in axialer Richtung bewirken.

Nach einer Weiterbildung der Erfindung können die Haltemittel jeweils kugelförmig, d. h. als Kugeln, ausgeführt sein. Die Haltemittel ragen bei dieser Bauart in ihrer Haltestellung bevorzugt in einer radialen Richtung in die Aufnahmen des Magazins hinein. Dadurch kann ein in der Aufnahme angeordnetes Probenröhrchen beispielsweise zwischen zwei zueinander axial versetzt angeordneten Halteelementen ohne ein axiales Spiel oder mit einem nur geringen axialen Spiel in der Aufnahme des Magazins lagegesichert werden.

Das Betätigungsglied kann nach einer Ausführungsform umfangsseitig angeordnete Einbuchtungen aufweisen, in die die Haltemittel in einer der Funktionsstellungen des Betätigungsglieds in radialer Richtung einrücken können bzw. eingerückt sind. Im Fall der als Klemmlaschen ausgeführten Haltemittel ist dies in deren Halte- oder Klemmstellung der Fall. Im Falle der kugelförmigen Haltemittel ist dies vorzugsweise in ihrer Freigabestellung der Fall.

Nach einer Weiterbildung der Erfindung kann zumindest ein Teil der Aufnahmen oder können alle Aufnahmen des Magazins in ihrer Länge derart bemessen sein, dass jeweils mehrere Entnahmeröhrchen in axialer Richtung hintereinanderliegend in den einzelnen Aufnahmen anordenbar sind. Dadurch kann das für Transportzwecke zur Verfügung stehende Innenraumvolumen der Rohrpostbüchse nochmals besser ausgenutzt werden.

Nach einer besonders bevorzugten Weiterbildung der Erfindung sind die Haltemittel jeweils als ein Federelement, insbesondere in Form einer Blattfeder, ausgebildet. Die Haltemittel können in diesem Fall als voneinander separate Bauteile ausgeführt sein. Unter fertigungstechnischen wie auch Kostengesichtspunkten sind die Federelemente erfindungsgemäß miteinander einstückig ausgeführt. So können die Federelemente insbesondere Teil, d.h. (Material-)Abschnitte einer auf dem Betätigungsglied angeordneten Hülse sein.

Eine gegenüber Funktionsstörungen besonders unempfindliche Bauweise kann nach der Erfindung dadurch realisiert werden, dass das Federelement einenends am Betätigungsglied in axialer Richtung lagefixiert angeordnet ist und sich anderenends in radialer Richtung am Betätigungsglied abstützt, wobei sich das Federelement in einer Funktionsstellung des Betätigungsglieds über eine seitliche Wandöffnung der Aufnahme abschnittsweise in radialer Richtung in die Aufnahme hineinerstreckt und sich beim Überführen des Betätigungsglieds in die zweite Funktionsstellung, hier dessen Entriegelungsstellung, unter Abstützung an einem freien Rand der Wandöffnung aus der Aufnahme herausbewegt. Das Betätigungsglied ist bei dieser Bauweise bevorzugt entlang der seiner Bewegungsachse relativ zu den Aufnahmen verstellbar.

Das Betätigungsglied ist nach der Erfindung vorzugsweise jeweils gegen die Kraft einer Feder aus der ersten in die jeweilige zweite Funktionsstellung bewegbar. Dadurch kann das Betätigungsglied nach dessen Betätigung ohne Weiteres Zutun durch das jeweilige Federelement in seine erste Funktionsstellung bzw. Ausgangsstellung zurückbewegt werden.

Das Betätigungsglied ist vorzugsweise an zumindest zwei voneinander beabstandet angeordneten End- oder Lagerscheiben des Magazins gelagert ist, wobei die Lagerscheiben bevorzugt Einführöffnungen der Aufnahmen in radialer Richtung begrenzen. Dadurch kann einerseits eine besonders zuverlässige Funktion des Betätigungsglieds erreicht werden. Durch die Doppelfunktion der Lagerscheibe kann das Gewicht sowie die Anzahl der erforderlichen Bauteile und des Gewichts des Magazins klein gehalten werden. Dies bietet Kostenvorteile.

Der Transport von Entnahmeröhrchen mittels einer Rohrpostbüchse birgt das Risiko einer Verunreinigung und schlimmstenfalls Kontamination des Büchseninneren mit potentiell infektiösem Material. Für eine vereinfachte hygienische Aufbereitung der Rohrpostbüchse ist das Magazin deshalb nach der Erfindung bevorzugt lösbar in dem rohrförmigen Grundkörper der Rohrpostbüchse angeordnet.

Für eine besonders wirkungsvolle Dämpfung von Stößen kann das Magazin im Grundkörper schwimmend gelagert sein. Dies kann nach der Erfindung dadurch erreicht werden, dass das Magazin über elastisch verformbare Lagerteile, beispielsweise Lagerringe, am Grundkörper der Rohrpostbüchse gelagert ist. Die Lagerteile können aus Gummi oder einem Elastomer bestehen.

Das Magazin kann gleichermaßen bei neu hergestellten Rohrpostbüchsen wie auch bei bereits existierenden Rohrpostbüchsen eingesetzt werden.

Das Magazin ist vorzugsweise insgesamt autoklavierbar. So kann das Magazin beispielsweise aus einem oder mehreren autoklavierbaren Kunststoffen bestehen. Dadurch kann selbst nach einer möglichen Verunreinigung des Magazins, insbesondere mit Bakterien sowie humanpathogenen Viren, eine Aufbereitung des Magazins gewährleistet werden, die hohen hygienischen Anforderungen erfüllt.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1:: eine Rohrpostbüchse mit einem einstöckigen Magazin zur Aufnahme von Probenröhrchen, in einem Längsschnitt;
- Fig. 2:: die Rohrpostbüchse gemäß Fig. 1 mit geöffneten Deckeln während des Entladevorgangs, in einem Längsschnitt;
- Fig. 3:: eine alternative Ausführungsform eines Magazins für Probenröhrchen für eine Rohrpostbüchse gemäß Fig. 1, bei dem die Probenröhrchen in den Aufnahmen jeweils mittels einer Blattfeder klemmbar sind, in einem freigestellten Längsschnitt;
- Fig. 4:: das Magazin gemäß Fig. 3, bei dem das Betätigungsglied gegenüber aus der in Fig. 3 gezeigten ersten Funktionsstellung zur einen Seite hin in eine zweite Funktionsstellung verstellt wurde, um die Blattfedern in ihre Freigabestellung zu überführen, in einem Längsschnitt;
- Fig. 5:: eine ausschnittsweise Detaildarstellung des Magazins gemäß Fig. 4, mit einer der in Freigabestellung angeordneten Blattfedern;
- Fig. 6:: das Magazin gemäß Fig. 3, bei dem das Betätigungsglied gegenüber aus der in Fig. 3 gezeigten ersten Funktionsstellung ein einer anderen Richtung in eine zweite Funktionsstellung verstellt wurde, um die Blattfedern in ihre Freigabestellung zu überführen, in einem Längsschnitt;
- Fig. 7:: eine ausschnittsweise Detaildarstellung des Magazins gemäß Fig. 6, mit einer der in Freigabestellung angeordneten Blattfedern;
- Fig. 8:: eine Rohrpostbüchse mit einem mehrstöckigen magazin, in dessen Aufnahmen jeweils mehrere Probenröhrchen hintereinander aufgereiht anordenbar sind, in einem Längsschnitt; und
- Fig. 9:: die Rohrpostbüchse gemäß Fig. 8 während eines Entladevorgangs, in einem Längsschnitt.

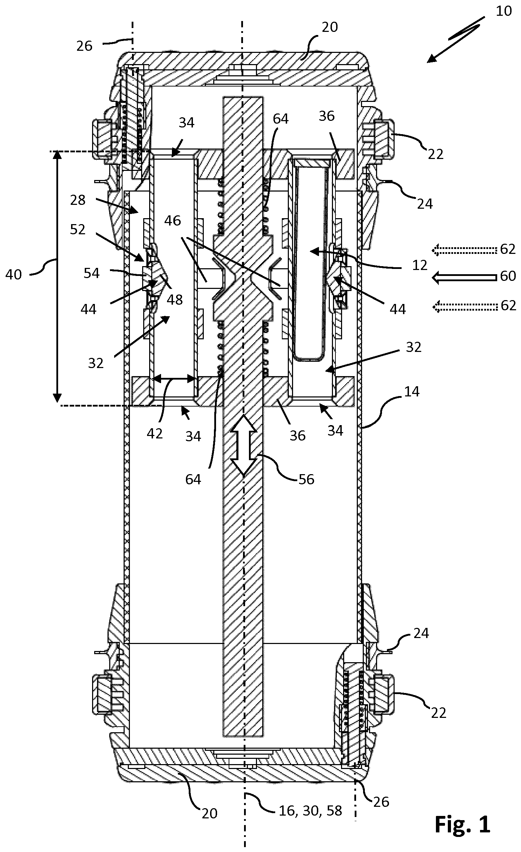

**Fig. 1** zeigt eine Rohrpostbüchse **10** für den Transport von Probenröhrchen **12,** hier sogenannten Entnahmeröhrchen für Körperflüssigkeiten wie Blut, Liquor cerebrospinalis, Urin, Pleuraflüssigkeit und dergleichen, innerhalb eines Rohrleitungssystems einer an sich bekannten Rohrpostanlage (nicht gezeigt).

Die Rohrpostbüchse 10 weist einen hülsen- bzw. rohrförmigen Grundkörper **14** auf der sich entlang der Längsachse **16** der Rohrpostbüchse erstreckt, der beidenends mit einer Öffnung **18** versehen ist. Die beiden Öffnungen 18 der Rohrpostbüchse 10 sind jeweils mit einem Deckel **20** verschließbar und dienen dem Be- und Entladen der Rohrpostbüchse 10.

An der Rohrpostbüchse 10 sind außenseitig in an sich bekannter Weise zwei Laufstreifen **22** angeordnet, die beispielsweise aus einem Textil oder einem Flauschband bestehen können. Bedarfsweise können zusätzliche Dichtringe 24 vorgesehen sein, um eine verbessete dichtende Anlage der Rohrpostbüchse 10 an der Wandung des Rohrleitungssystems zu ermöglichen. Die Deckel 20 sind hier am Grundkörper 14 der Rohrpostbüchse 10 jeweils um eine mit **26** bezeichnete Schwenkachse verschwenkbar angelenkt. Die Schwenkachse 26 ist zur Längsachse 16 des Grundkörpers 14 parallel oder im Wesentlichen parallel verlaufend ausgerichtet. Die Deckel 20 können nach einem in der Zeichnung nicht näher wiedergegebenen alternativen Ausführungsbeispiel auch als Klappdeckel ausgeführt sein.

Innerhalb des rohrförmigen Grundkörpers 14 ist ein insgesamt mit **28** bezeichnetes Magazin zur Aufnahme der Probenröhrchen 12 angeordnet. Das Magazin 28 weist eine Magazinlängsachse **30** auf, die hier mit der Längsachse 16 der Rohrpostbüchse 10 zusammenfällt. Das Magazin 28 umfasst mehrere kanalförmige Aufnahmen **32** mit stirnseitigen Öffnungen **34,** über die jeweils ein zu transportierendes Probenröhrchen 12 in die jeweilige Aufnahme 32 einschiebbar ist. Die Aufnahmen 32 sind voneinander beabstandet ringförmig um die Magazinlängsachse 30 herum angeordnet und können von dieser einheitlich beabstandet sein. Die stirnseitigen Öffnungen 34 der Aufnahmen 32 sind hier beispielhaft jeweils durch eine Lagerscheibe **36** definiert. Zwischen den Lagerscheiben 36 erstrecken sich hülsenförmige Wandelemente **38,** die jeweils eine der Aufnahmen 32 seitlich begrenzen. Die Wandelemente 38 können mit den Lagerscheiben 36 insbesondere verschweißt, verklebt oder verschraubt sein oder sind zwischen den Lagerscheiben 36 im axialen Presssitz gehalten angeordnet. Die Aufnahmen 32 können jeweils eine übereinstimmende axiale Länge 40 aufweisen oder sich in Ihrer Länge 40 voneinander unterscheiden. Die Aufnahmen weisen hier einen einheitlichen Innendurchmesser **42** auf. Zumindest ein Teil der Aufnahmen kann auch einen unterschiedlichen Innendurchmesser 42 aufweisen, um so Probenröhrchen 12 mit unterschiedlichem Querschnitt aufnehmen zu können.

Jede Aufnahme 32 des Magazins 28 ist mit einem Haltemittel versehen, um ein in der jeweiligen Aufnahme 32 aufgenommenes Proberöhrchen 12 während des Transports gegenüber einem ungewollten axial gerichteten Herausrutschen aus der beidenends offenen Aufnahme 32 zu sichern. Die Haltemittel **44** sind bei dem hier gezeigten Ausführungsbeispiel jeweils in Form von Klemmlaschen ausgeführt. Die Klemmlaschen weisen jeweils einen Fußabschnitt **46** und einen gegenüber dem Fußabschnitt 46 abgewinkelten oder umgebogenen Halteabschnitt **48** auf. Der Halteabschnitt 48 umgreift in dem für das Versenden der Probenröhrchen vorgesehenen Betriebszustand der Rohrpostbüchse 10 ein in die jeweilige Aufnahme 32 eingeschobenes Probenröhrchen 12 in radialer Richtung außenseitig. Zu beachten ist, dass sich die Fußabschnitte 46 der Klemmlaschen 44 jeweils durch eine erste Seitenwandöffnung **50** des Wandelements 38 radial in Richtung auf die Magazinlängsachse 30 erstrecken. Die Wandelemente weisen zweite Wandöffnungen **52** auf, die zu den ersten Seitenwandöffnungen 50 jeweils diametral gegenüberliegend angeordnet sind. Den Klemmlaschen ist jeweils ein Vorspannelement **54** zugeordnet, durch das eine radial nach innen gerichtete Vorspannung der Klemmlaschen 44 bewirkt ist. Die Klemmlaschen können somit gegen das elastische Rückstellvermögen des Vorspannelements 54 relativ zur Aufnahme 32 in radialer Richtung nach außen bewegt/ausgelenkt werden. Dadurch können die Probenröhrchen 12 allein durch deren Einschieben in die Aufnahmen 32 durch Klemmen in den Probenröhrchen lagegesichert werden.

Das Vorspannelement 54 ist in radialer Richtung außenseitig um die Aufnahmen 32 geführt und liegt an den über die zweiten Seitenwandöffnungen 52 zugänglichen Halteabschnitten 48 der Haltemittel 44 an. Das Vorspannelement 54 kann aus Gummi oder einem Elastomer bestehen. Es versteht sich, dass auch mehrere solcher Vorspannelemente 54 vorgesehen sein könne, um eine nochmals weiter erhöhte Betriebssicherheit der Rohrpostbüchse 10 zu erreichen.

Die als Klemmlaschen ausgeführten Haltemittel 44 sind über ein Betätigungsglied **56** betätigbar. Das Betätigungsglied 56 kann gemäß Fig. 1 zur Längsachse 16 der Rohrpostbüchse 10 koaxial verlaufend angeordnet sein.

Das Betätigungsglied 56 ist entlang seiner mit **58** bezeichneten Bewegungsachse aus seiner ist in Fig. 1 gezeigten ersten Funktionsstellung **60** bidirektional relativ zu den Aufnahmen 32 in eine jeweilige zweite Funktionsstellung **62** verschiebbar angeordnet. Das Betätigungsglied 56 ist jeweils gegen die Kraft eines Federelements **64** aus seiner ersten Funktionsstellung 60 auslenkbar. Die Federelemente 64 können sich einenends jeweils an einem Bund **66** des Betätigungsglieds 56 und anderenends an einer der beiden Lagerscheiben 36 abstützen.

Das Betätigungsglied 56 weist einen Steuerabschnitt **68** mit einer umfangsseitig angeordneten Einbuchtung **70** auf, in die die Haltemittel in der gezeigten ersten Funktionsstellungen 60 des Betätigungsglieds 56 in radialer Richtung eingreifen. Die Haltemittel 44 sind dadurch in ihrer jeweiligen Spannposition angeordnet.

Der Steuerabschnitt 68 weist zwei Steuernocken **72** mit jeweils einer zur Bewegungsachse 58 schräg verlaufend angeordneten Keilführungsfläche **74** für die Klemmlaschen auf, die in axialer Richtung zu beiden Seiten der Einbuchtung 70 angeordnet sind. Durch ein Überführen des Betätigungsglieds 56 in die zweite Funktionsstellung 62 ist dadurch eine Verstellung der Haltemittel 44 in radialer Richtung nach außen in ihre jeweilige Freigabeposition bewirkt. Ein in der jeweiligen Aufnahme 32 angeordnetes Probenröhrchen 12 kann dadurch selbstständig der Schwerkraft folgend nach unten aus der Aufnahme 32 herausrutschen und über die nach untern weisende Öffnung 18 aus der Rohrpostbüchse herausgeführt werden.

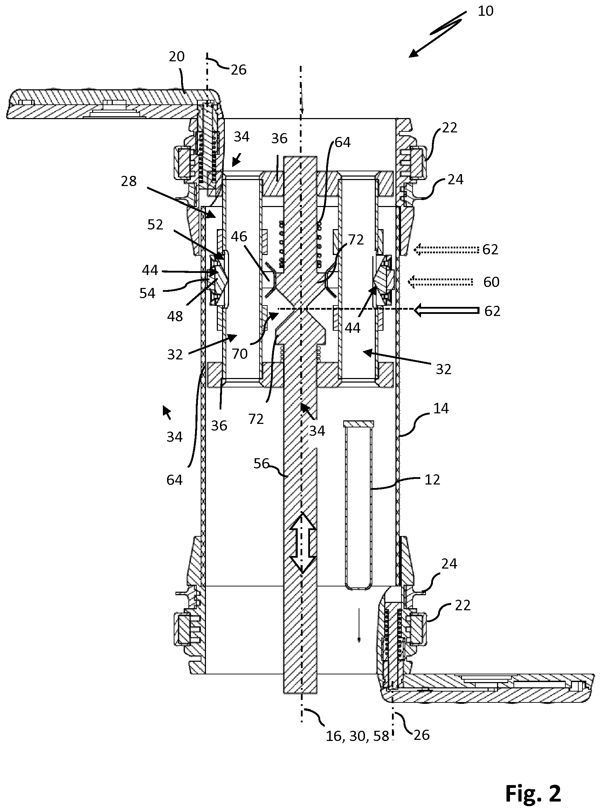

Das Betätigungsglied 56 erstreckt sich im versandbereiten Zustand der Rohrpostbüchse 10 in axialer Richtung beidenends nahezu bis zu den Deckeln 20. Die Deckel 20 können gemäß den Figuren 1 und **2** jeweils eine Durchgangsausnehmung **76** aufweisen, die mittels eines Dichtungselements **78** bevorzugt fluiddicht, verschlossen ist. Das Dichtungselement 78 kann am Deckel 20 festgeklebt, mit diesem verschweißt oder am Deckel 20 umlaufend geklemmt gehalten angeordnet sein. Zu beachten ist, dass die Dichtungselemente 78 hier axial in Richtung auf jeweilig andere Dichtungselement 78 verformbar sind. Für das Entleeren der Rohrpostbüchse muss deshalb nur der jeweilig nach unten weisende Deckel 20 der Rohrpostbüchse 10 geöffnet werden. Zum Betätigen des Betätigungsglieds 56 kann ein mit gestrichelter Linie dargestellter Stempel 80 oder dergleichen unter Verformung des Dichtungselements 78 über die Durchgangsausnehmung 76 des anderen (in Schließstellung angeordneten) Deckels 20 und gegen das Betätigungsglied 56 geführt werden, um dieses in die in Fig. 2 gezeigte zweite Funktionsstellung zu überführen und die Klemmung der Probenröhrchen 12 innerhalb der Aufnahmen 32 aufzuheben.

Das Magazin 28 kann im Grundkörper 14 der Rohrpostbüchse 10 vorteilhaft schwimmend gelagert sein, um so das Magazin 28 sowie darin gehaltene Probenröhrchen 12 gegen übermäßige Erschütterungen zu schützen. Dies kann dadurch erreicht werden, dass die Lagerscheiben 36 des Magazins 28 über elastisch verformbare Lagerteile **80,** beispielsweise Lagerringe, am Grundkörper 14 der Rohrpostbüchse 10 gelagert ist.

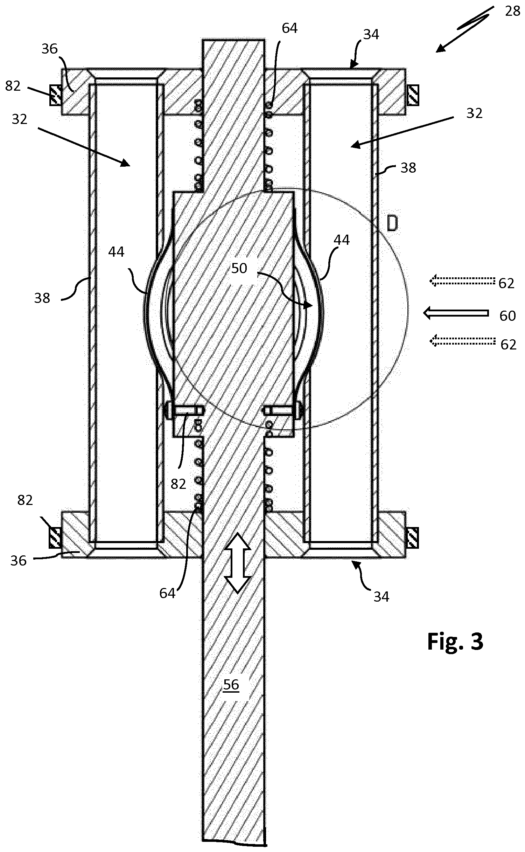

In den **Figuren 3** bis **7** ist ein weiteres Ausführungsbeispiel eines Magazins 28 gezeigt, wie dieses bei einer Rohrpostbüchse 10 gemäß den Fign 1 und 2 eingesetzt werden kann. Das Magazin 28 unterscheidet sich von dem vorstehend erläuterten Magazin 28 im Wesentlichen bezüglich der Haltemittel 44. Die Haltemittel 44 sind hier jeweils in Form von Blattfedern ausgeführt. Die Blattfedern sind einenends am Betätigungsglied 56 in axialer Richtung lagefixiert gehalten angeordnet und stützen sich anderenends in radialer Richtung am Betätigungsglied 56 (außenseitig) ab. Die Blattfedern sind in der gezeigten ersten Funktionsstellung 60 des Betätigungsglieds 56 in radialer Richtung konvex nach außen gebogen, sodass sie jeweils über die erste Seitenwandöffnung 50 eines Wandelements 38 der jeweiligen Aufnahme 32 in die Aufnahme 32 hineinragen. Die Blattfedern können beispielsweise mittels Schrauben **82** oder anderer Befestigungsmittel am Betätigungsglied 56 befestig sein. Wird ein Probenröhrchen 12 in eine der Aufnahmen 32 eingeschoben, so wird die der Aufnahme zugeordnete Blattfeder vom Probenröhrchen 12 in radialer Richtung zur Magazinlängsachse hin verdrängt und sich entsprechend abflachen. Das freie Ende der Blattfeder gleitet dabei auf dem Betätigungsglied 56 in einer von dem festgelegten anderen Ende in axialer Richtung weg. Durch das elastische Rückstellvermögen der Blattfeder wird das Probenröhrchen 12 innerhalb der Aufnahme 32 geklemmt gehalten.

Beim Überführen des Betätigungsglieds 56 in die zweite Funktionsstellung 62 werden die Blattfedern kollektiv unter Abstützung an einem freien Rand der Seitenwandöffnung aus der Aufnahme 32 verformt und aus der jeweiligen Aufnahme bis in ihre Freigabestellung herausbewegt.

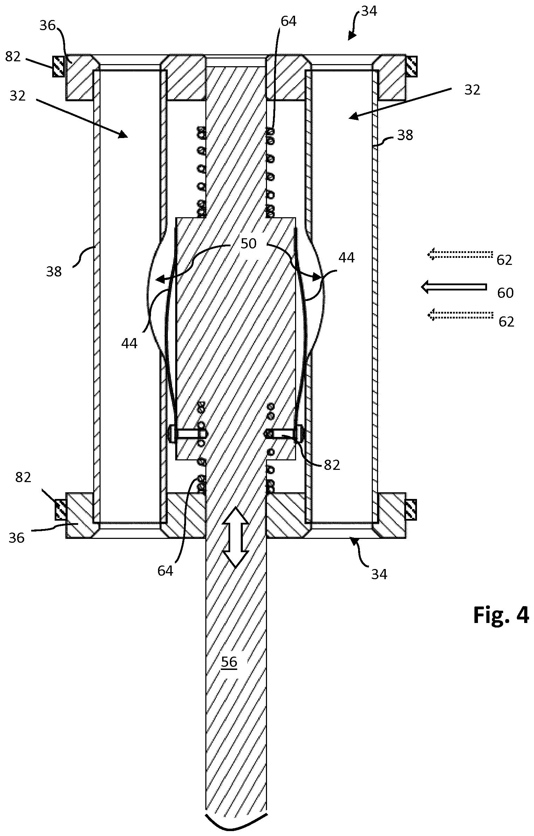

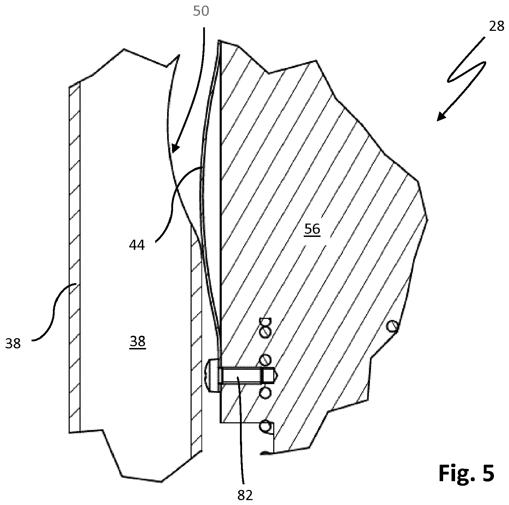

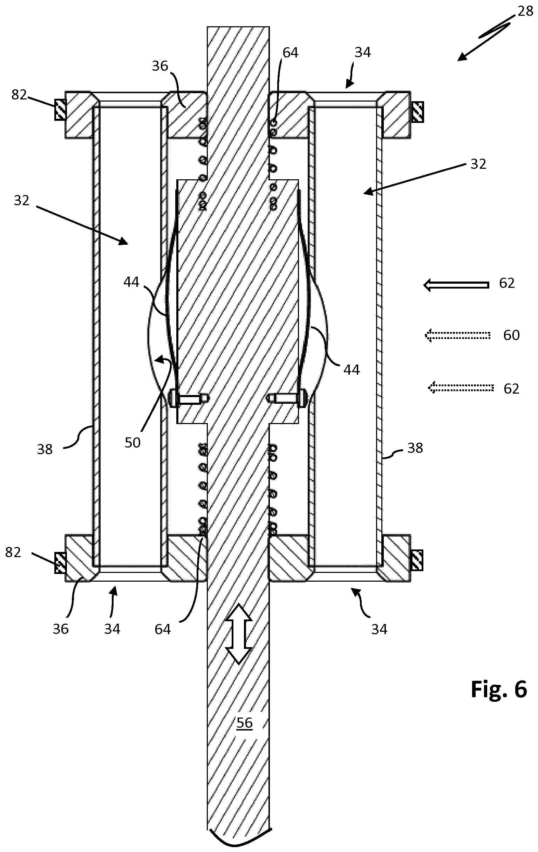

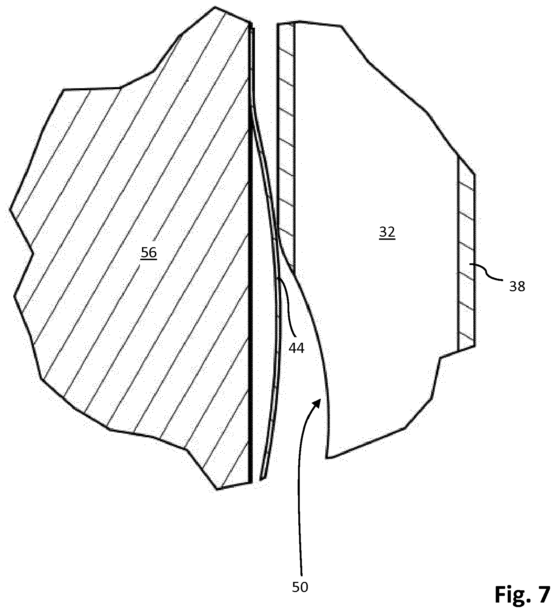

In den **Fign. 4** und **5** ist das Betätigungsglied bezogen auf die erste Funktionsstellung in seine untere zweite Funktionsstellung 62 verstellt angeordnet. In den **Figuren 6** und **7** ist das Betätigungsglied 56 in axialer Richtung in seine obere zweite Funktionsstellung 62 verstellt angeordnet.

Die Blattfedern befinden sich jeweils in ihrer (in radialer Richtung) eingerückten Freigabestellung, in der ein Klemmen von in den Aufnahmen angeordneten Probenröhrchen nicht ermöglicht ist. In den Aufnahmen angeordnete Probenröhrchen können dadurch selbstständig der Schwerkraft folgend in Lotrichtung nach unten aus der Aufnahme 32 herausrutschen. Eine mit dem in den Figuren 3 bis 7 gezeigten Magazin 28 versehene Rohrpostbüchse 10 kann so durch Betätigung des Betätigungsglieds 56 auf einfache und zuverlässige Weise entleert werden. Die Blattfedern können nach einem in der Zeichnung nicht näher dargestellten Ausführungsbeispiel auch einstückig miteinander, insbesondere als Teil einer auf dem Betätigungsglied 56 angeordneten Federhülse, ausgebildet sein.

Die in der Praxis eingesetzten Rohrpostbüchsen 10 weisen eine Gesamtlänge auf, die in der Regel ein Mehrfaches der Länge von handelsüblichen Proben- bzw. Entnahmeröhrchen beträgt. Die vorstehend erläuterten Magazine 28 können deshalb auch doppelstöckig oder dreistöckig ausgeführt sein und Aufnahmen 32 aufweisen, in denen mehrere Probenröhrchen 12 in axialer Richtung hintereinander anordenbar sind. Dadurch kann das Nutzvolumen der Rohrpostbüchse 10 nochmals effizienter ausgenutzt werden.

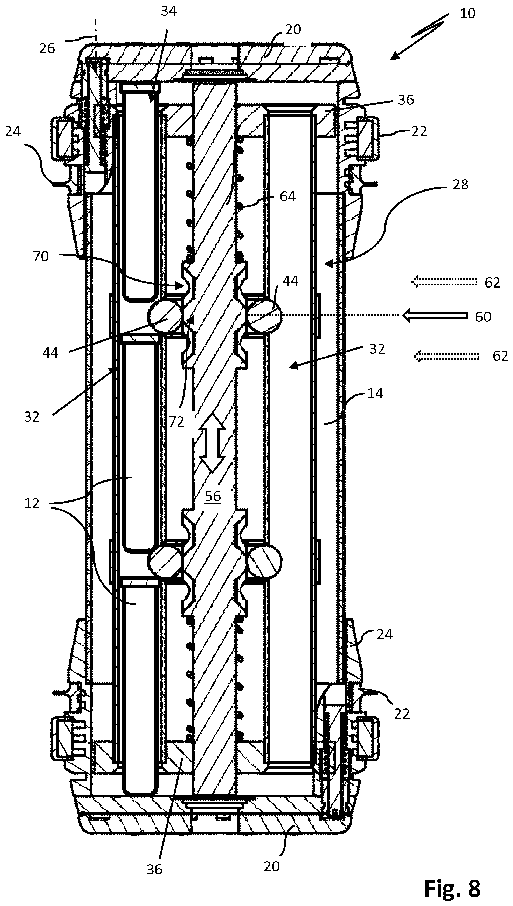

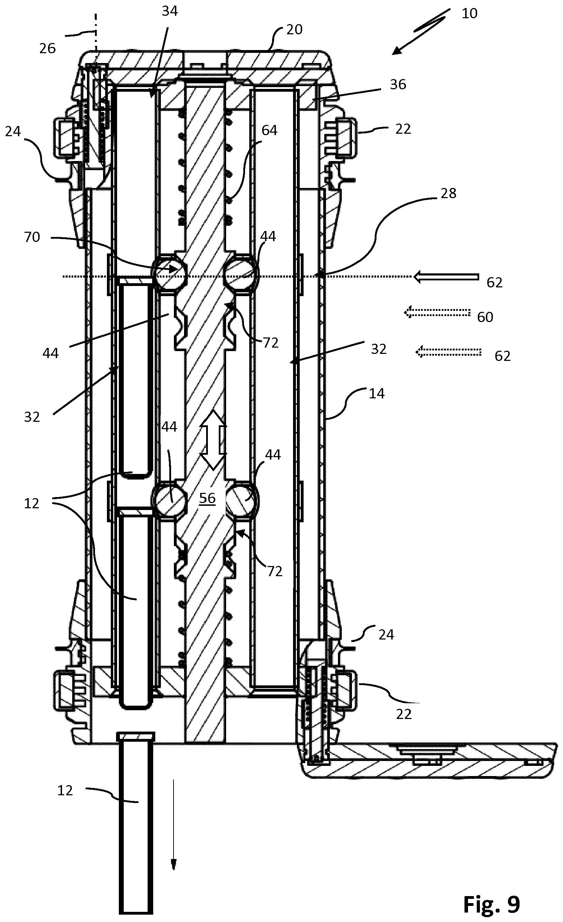

In den **Fign. 8** und **9** ist eine Rohrpostbüchse 10 mit einem mehrstöckigen Magazin 28 gezeigt. Das Magazin 28 weist ein mittleres Magazinsegment **28a** auf, das in axialer Richtung zwischen zwei deckel- oder endseitigen Magazinsegmenten **28b, 28c** angeordnet ist. Die Aufnahmen 32 erstrecken sich durch alle drei Magazinsegmente 28a, 28b, 28c hindurch sodass darin jeweils bis zu drei Proben- bzw. Entnahmeröhrchen 12 mit definierter Länge in axialer Richtung hintereinanderliegend anordenbar sind.

Bei dem gezeigten Ausführungsbeispiel des Magazin 28 sind die Haltemittel 44 kugelförmig ausgeführt. Die Haltemittel 44 ragen in ihrer Haltestellung jeweils abschnittsweise über erste Seitenwandöffnungen 50 der hülsenförmigen Wandelemente 38 in die Aufnahmen 32 hinein. Das Betätigungselement 56 ist in Fig. 8 in seiner ersten Funktionsstellung längs seiner Bewegungsachse 58 gezeigt. Die kugelförmigen Haltemittel 44 stützen sich in ihrer Haltestellung an einem Steuernocken 72 des Betätigungsglieds 56 ab. Die kugelförmigen Haltemittel 44 ragen derart in die Aufnahmen 32 hinein, dass ein im mittleren Segment 28a des Magazins 28 angeordnetes Probenröhrchen zwischen zwei Haltemitteln 44 mit einem nur geringen axialen Spiel positionsgesichert ist. Die Probenröhrchen 12 des zweiten und des dritten Magazinsegments 28b, 28c sind mithin jeweils durch ein Haltemittel 44 vom Probenröhrchen 12 im ersten Magazinsegment 28a getrennt. Zu beachten ist, dass die Probenröhrchen 12 des zweiten und dritten (deckelseitigen) Magazinsegmente in ihrer axialen Bewegungsfreiheit jeweils durch einen der Deckel 20 begrenzt sind. In Fig. 9 ist das Betätigungsglied 56 in eine seiner zweiten Funktionsstellungen 62 überführt. In der zweiten Funktionsstellung 62 fluchten die kugelförmigen Haltemittel 44 jeweils mit einer umfangsseitigen Einbuchtung 70 des Betätigungsglieds 56, so dass diese bei einer vertikalen Ausrichtung der Rohrpostbüchse 10 selbstständig bzw. durch den Druck eines auf dem jeweiligen Haltemittel 44 aufsitzenden Probenröhrchens 12 in ihre Freigabestellung nach radial innen einrücken, wie dies in Fig. 9 dargestellt ist. Die im Magazin 28 enthaltenen Probenröhrchen 12 können dadurch auch bei dieser Ausführungsform des Magazins 28 selbstständig der Schwerkraft folgend nach unten aus der Aufnahme 32 herausrutschen.

## Patentansprüche

1. Rohrpostbüchse (10) für den Transport von Probenröhrchen (12) für Körperflüssigkeiten entlang einer Rohrpostanlage, mit einem rohrförmigen Grundkörper (14), der beidenends eine Öffnung (18) aufweist, die jeweils mit einem Deckel (20) verschließbar ist und mit einem im Grundkörper (14) angeordneten Magazin (28) wobei das Magazin umfasst:
- mehrere Aufnahmen (32), die innerhalb des Grundkörpers (14) nebeneinanderliegend angeordnet sind und in die jeweils zumindest ein zu transportierendes Probenröhrchen (12) in Richtung der Magazinlängsachse (30) einschiebbar ist,
- zumindest ein Haltemittel (44) für jede Aufnahme (32), um ein in der jeweiligen Aufnahme (32) aufgenommenes Probenröhrchen (12) gegenüber einem ungewollten axial gerichteten Herausrutschen aus der Aufnahme (32) zu sichern;
**dadurch gekennzeichnet, dass** das Magazin weiter umfasst:
- ein Betätigungsglied (56), das, bevorzugt bidirektional, um oder entlang einer Bewegungsachse (58) relativ zu den Aufnahmen (32) aus einer ersten Funktionsstellung (60) in eine jeweilige zweite Funktionsstellung (60) verstellbar angeordnet ist, wobei durch Überführen des Betätigungsglieds (56) aus einer der Funktionsstellungen (60, 62) in die jeweilig andere Funktionsstellung (60, 62) eine Überführung aller Haltemittel (44) in ihre jeweilige Freigabeposition bewirkt oder ermöglicht ist, sodass ein in der jeweiligen Aufnahme (32) angeordnetes Probenröhrchen (12) selbstständig der Schwerkraft folgend aus der Aufnahme (32) herausrutschen kann.

2. Rohrpostbüchse nach Anspruch 1, **dadurch gekennzeichnet, dass** die Aufnahmen (32) ringförmig um das Betätigungsglied (56) herum angeordnet sind.

3. Rohrpostbüchse nach Anspruch 1 oder 2, **dadurch gekennzeichnet, dass** die Haltemittel (44) jeweils kugelförmig ausgeführt sind.

4. Rohrpostbüchse nach Anspruch 1 oder 2, **dadurch gekennzeichnet, dass** die Haltemittel (44) jeweils in Form einer Klemmlasche ausgebildet sind, mittels derer ein Probenröhrchen (12) in der jeweiligen Aufnahme (32) klemmbar ist, wobei die Klemmlasche durch ein Vorspannelement (54) in einer zur Magazinlängsachse (30) radialen Richtung, bevorzugt nach innen, vorgespannt ist.

5. Rohrpostbüchse nach Anspruch 4, **dadurch gekennzeichnet, dass** das Vorspannelement (54) die Aufnahmen (32) des Magazins (28) ringförmig umgreift.

6. Rohrpostbüchse nach Anspruch 4 oder 5, **dadurch gekennzeichnet, dass** das Vorspannelement (54) aus Gummi oder aus einem Elastomer besteht.

7. Rohrpostbüchse nach einem der vorhergehenden Ansprüche, **dadurch gekennzeichnet, dass** das Betätigungsglied (56) zumindest eine umfangsseitig angeordnete Einbuchtung (70) aufweist, in die die Haltemittel (44) in einer der Funktionsstellungen (60, 62) des Betätigungsglieds (56) in radialer Richtung einrücken können.

8. Rohrpostbüchse nach einem der vorhergehenden Ansprüche, **dadurch gekennzeichnet, dass** zumindest ein Teil der Aufnahmen (32) des Magazins (28) in ihrer Länge derart bemessen ist, dass jeweils mehrere Probenröhrchen (12) in axialer Richtung hintereinanderliegend in den Aufnahmen (32) anordenbar sind.

9. Rohrpostbüchse nach Anspruch 8, **dadurch gekennzeichnet, dass** die Halteelemente (44) in ihrer ein Probenröhrchen in der Aufnahme haltenden Haltestellung zumindest teilweise zwischen zwei in einer Aufnahme (32) angeordneten Probenröhrchen (12) angeordnet sind.

10. Rohrpostbüchse nach Anspruch 1 oder 2, **dadurch gekennzeichnet, dass** die Haltemittel (44) jeweils als ein Federelement, insbesondere in Form einer Blattfeder, ausgebildet sind.

11. Rohrpostbüchse nach Anspruch 10, **dadurch gekennzeichnet, dass** die Federelemente einstückig miteinander ausgebildet sind.

12. Rohrpostbüchse nach Anspruch 10 oder 11, **dadurch gekennzeichnet, dass** das Federelement einenends am Betätigungsglied (56) in axialer Richtung lagefixiert angeordnet ist und sich anderenends in radialer Richtung am Betätigungsglied (56) abstützt, wobei das Federelement in einer Funktionsstellung (60, 62) des Betätigungsglieds (56) über eine Seitenwandöffnung (50, 52) eines hülsenförmigen Wandelements (38) in radialer Richtung in die Aufnahme (32) hineinerstreckt und sich beim Überführen des Betätigungsglieds (56) in die jeweilig andere Funktionsstellung (60, 62) unter Abstützung an einem freien Rand der Seitenwandöffnung (50, 52) aus der Aufnahme (32) in seine Freigabestellung herausbewegt.

13. Rohrpostbüchse nach einem der vorhergehenden Ansprüche, **dadurch gekennzeichnet, dass** das Betätigungsglied (56) jeweils gegen die Kraft eines Federelements (64) aus der einen in die jeweilig andere Funktionsstellung (60, 62) bewegbar ist.

14. Rohrpostbüchse nach einem der vorhergehenden Ansprüche, **dadurch gekennzeichnet, dass** das Betätigungsglied (56) an zumindest zwei voneinander beabstandet angeordneten Lagerscheiben (36) des Magazins (28) gelagert ist, wobei die Lagerscheiben (36) bevorzugt stirnseitige Öffnungen (34) der Aufnahmen (32) in radialer Richtung begrenzen.

15. Rohrpostbüchse nach einem der vorhergehenden Ansprüche, **dadurch gekennzeichnet, dass** das Magazin (28) lösbar in dem rohrförmigen Grundkörper (14) angeordnet ist.

16. Rohrpostbüchse nach einem der vorhergehenden Ansprüche, **dadurch gekennzeichnet, dass** das Magazin (28) im Grundkörper (14) der Rohrpostbüchse (10) schwimmend gelagert ist.

## Claims

1. Pneumatic tube carrier (10) for transporting sample tubes (12) for bodily fluids along a pneumatic tube system, said carrier comprising a tubular main part (14) which has an opening (18) at both ends that can be closed by means of a lid (20), and comprising a magazine (28) arranged in the main part (14), the magazine comprising:
- a plurality of receptacles (32) which are arranged one next to the other within the main part (14), and into each of which at least one sample tube (12) to be transported can be inserted in the direction of the longitudinal axis (30) of the magazine,
- at least one holding means (44) for each receptacle (32), for ensuring that a sample tube (12) received in the relevant receptacle (32) does not inadvertently slide out of said receptacle (32) in the axial direction;
**characterized in that** the magazine further comprises:
- an actuating member (56), which is arranged such that it can be shifted relative to the receptacles (32), preferably bidirectionally, about or along a movement axis (58), from a first functional position (60) into a second functional position (60), the transfer of the actuating member (56) from one of the functional positions (60, 62) into the other functional position (60, 62) causing or allowing all of the holding means (44) to be transferred into the corresponding release position thereof such that a sample tube (12) arranged in each receptacle (32) can automatically slide out of said receptacle (32) due to the force of gravity.

2. Pneumatic tube carrier according to claim 1, **characterized in that** the receptacles (32) are arranged annularly around the actuating member (56).

3. Pneumatic tube carrier according to either claim 1 or claim 2, **characterized in that** the holding means (44) are each spherical.

4. Pneumatic tube carrier according to either claim 1 or claim 2, **characterized in that** the holding means (44) are each in the form of a clamping lug, by means of which a sample tube (12) can be clamped in the relevant receptacle (32), the clamping lug being biased in a direction radial to the longitudinal axis (30) of the magazine, preferably inwards, by means of a biasing element (54).

5. Pneumatic tube carrier according to claim 4, **characterized in that** the biasing element (54) annularly surrounds the receptacles (32) of the magazine (28).

6. Pneumatic tube carrier according to either claim 4 or claim 5, **characterized in that** the biasing element (54) consists of rubber or an elastomer.

7. Pneumatic tube carrier according to any of the preceding claims, **characterized in that** the actuating member (56) has at least one recess (70) arranged on the circumference thereof, in which recess the holding means (44) can engage in the radial direction when the actuating member (56) is in one of the functional positions (60, 62).

8. Pneumatic tube carrier according to any of the preceding claims, **characterized in that** at least some of the receptacles (32) of the magazine (28) are of such a length that a plurality of sample tubes (12) can be arranged in each of said receptacles (32) such that they are one behind the other in the axial direction.

9. Pneumatic tube carrier according to claim 8, **characterized in that**, when in their holding position in which they hold a sample tube in a receptacle, the holding elements (44) are arranged at least partially between two sample tubes (12) arranged in the receptacle (32).

10. Pneumatic tube carrier according to either claim 1 or claim 2, **characterized in that** the holding means (44) are each designed as a spring element, in particular in the form of a leaf spring.

11. Pneumatic tube carrier according to claim 10, **characterized in that** the spring elements are integral with one another.

12. Pneumatic tube carrier according to either claim 10 or claim 11, **characterized in that** the spring element, at one end, is arranged on the actuating member (56) such that it is fixed in the axial direction and, at the other end, is supported on the actuating member (56) in the radial direction, the spring element extending, in the radial direction, into the receptacle (32) through a side wall opening (50, 52) in a sleeve-shaped wall element (38) when the actuating member (56) is in one functional position (60, 62), and moving out of the receptacle (32) into its release position, whilst being supported against a free edge of the side wall opening (50, 52), when the actuating member (56) is transferred into the other functional position (60, 62).

13. Pneumatic tube carrier according to any of the preceding claims, **characterized in that** the actuating member (56) can be moved in each case against the force of a spring element (64) from one functional position (60, 62) into the other.

14. Pneumatic tube carrier according to any of the preceding claims, **characterized in that** the actuating member (56) is mounted on at least two spaced-apart bearing disks (36) of the magazine (28), the bearing disks (36) preferably defining, in the radial direction, end openings (34) in the receptacles (32).

15. Pneumatic tube carrier according to any of the preceding claims, **characterized in that** the magazine (28) is detachably arranged in the tubular main part (14).

16. Pneumatic tube carrier according to any of the preceding claims, **characterized in that** the magazine (28) is floatingly mounted in the main part (14) of the pneumatic tube carrier (10).

## Revendications

1. Boîte d'envoi pneumatique (10) dévolue au transport, le long d'une installation d'acheminement pneumatique, de tubes à essai (12) dédiés à des fluides corporels, comprenant un corps tubulaire de base (14) muni, aux deux extrémités, d'une ouverture (18) pouvant être obturée par un couvercle (20) respectif, et un magasin (28) logé dans ledit corps de base (14), lequel magasin inclut :
- plusieurs logements (32) qui sont agencés en juxtaposition à l'intérieur du corps de base (14) et dans lesquels au moins un tube à essai (12), devant être transporté, peut être inséré à chaque fois dans la direction de l'axe longitudinal (30) dudit magasin,
- au moins un moyen de retenue (44) affecté à chaque logement (32) pour faire en sorte qu'un tube à essai (12), intégré dans le logement (32) considéré, soit empêché de glisser involontairement hors dudit logement (32), dans le sens axial,
**caractérisée par le fait que** le magasin inclut, par ailleurs :
- un organe d'actionnement (56) agencé avec faculté de déplacement préférentiellement bidirectionnel par rapport aux logements (32), autour ou le long d'un axe de mouvement (58), d'une première position fonctionnelle (60) à une seconde position fonctionnelle (62) respective, sachant qu'un transfert dudit organe d'actionnement (56), de l'une des positions fonctionnelles (62) à l'autre position fonctionnelle (60, 62) considérée, provoque ou permet un transfert de tous les moyens de retenue (44) à leur emplacement de libération respectif, de façon telle qu'un tube à essai (12) intégré dans le logement (32) considéré puisse glisser de lui-même hors dudit logement (32), sous l'effet de la gravité.

2. Boîte d'envoi pneumatique selon la revendication 1, **caractérisée par le fait que** les logements (32) sont disposés annulairement tout autour de l'organe d'actionnement (56).

3. Boîte d'envoi pneumatique selon la revendication 1 ou 2, **caractérisée par le fait que** les moyens de retenue (44) sont, à chaque fois, de réalisation sphérique.

4. Boîte d'envoi pneumatique selon la revendication 1 ou 2, **caractérisée par le fait que** les moyens de retenue (44) sont réalisés, à chaque fois, sous la forme d'une patte de coincement au moyen de laquelle un tube à essai (12) peut être coincé dans le logement (32) respectif, ladite patte de coincement étant précontrainte, par un élément (54) de contrainte préalable, dans une direction radiale par rapport à l'axe longitudinal (30) du magasin, de préférence vers l'intérieur.

5. Boîte d'envoi pneumatique selon la revendication 4, **caractérisée par le fait que** l'élément (54) de contrainte préalable ceinture annulairement les logements (32) du magasin (28).

6. Boîte d'envoi pneumatique selon la revendication 4 ou 5, **caractérisée par le fait que** l'élément (54) de contrainte préalable consiste en du caoutchouc, ou en un élastomère.

7. Boîte d'envoi pneumatique selon l'une des revendications précédentes, **caractérisée par le fait que** l'organe d'actionnement (56) est pourvu d'au moins un renfoncement (70) disposé à la périphérie, dans lequel les moyens de retenue (44) peuvent s'engager radialement dans l'une des positions fonctionnelles (60, 62) dudit organe d'actionnement (56).

8. Boîte d'envoi pneumatique selon l'une des revendications précédentes, **caractérisée par le fait que** la longueur d'au moins une partie des logements (32) du magasin (28) est dimensionnée de telle sorte que plusieurs tubes à essai (12) puissent être agencés à chaque fois, dans lesdits logements (32), en succession mutuelle dans la direction axiale.

9. Boîte d'envoi pneumatique selon la revendication 8, **caractérisée par le fait que**, dans leur position de retenue maintenant un tube à essai dans le logement, les moyens de retenue (44) sont interposés, au moins en partie, entre deux tubes à essai (12) intégrés dans un logement (32).

10. Boîte d'envoi pneumatique selon la revendication 1 ou 2, **caractérisée par le fait que** les moyens de retenue (44) sont réalisés à chaque fois en tant qu'élément élastique, en particulier sous la forme d'une lame de ressort.

11. Boîte d'envoi pneumatique selon la revendication 10, **caractérisée par le fait que** les éléments élastiques sont réalisés pour former un seul tenant les uns avec les autres.

12. Boîte d'envoi pneumatique selon la revendication 10 ou 11, **caractérisée par le fait que** l'élément élastique est implanté sur l'organe d'actionnement (56) avec consignation à demeure dans la direction axiale, à une extrémité, et est en appui sur ledit organe d'actionnement (56) dans la direction radiale, à l'autre extrémité, sachant que, dans une position fonctionnelle (60, 62) dudit organe d'actionnement (56), ledit élément élastique pénètre radialement dans le logement (32) par l'intermédiaire d'une ouverture (50, 52) de la paroi latérale d'un élément de cloisonnement (38) en forme de douille, et sort dudit logement (32) pour gagner sa position de libération, lors du transfert dudit organe d'actionnement (56) à l'autre position fonctionnelle (60, 62) considérée, en prenant appui sur un bord libre de ladite ouverture (50, 52) de la paroi latérale.

13. Boîte d'envoi pneumatique selon l'une des revendications précédentes, **caractérisée par le fait que** l'organe d'actionnement (56) peut être mû à chaque fois, de l'une des positions fonctionnelles (60, 62) à l'autre position considérée, en opposition à la force d'un élément élastique (64).

14. Boîte d'envoi pneumatique selon l'une des revendications précédentes, **caractérisée par le fait que** l'organe d'actionnement (56) est monté sur au moins deux disques de support (36) du magasin (28), distants l'un de l'autre, lesquels disques de support (36) délimitent, de préférence, des ouvertures d'extrémité (34) des logements (32) dans la direction radiale.

15. Boîte d'envoi pneumatique selon l'une des revendications précédentes, **caractérisée par le fait que** le magasin (28) est logé de manière libérable dans le corps tubulaire de base (14).

16. Boîte d'envoi pneumatique selon l'une des revendications précédentes, **caractérisée par le fait que** le magasin (28) est monté flottant dans le corps de base (14) de ladite boîte d'envoi pneumatique (10).
